# EUROPEAN PATENT SPECIFICATION

(11) **EP 1 968 760 B1**
(45) Date of publication and mention of the grant of the patent: **23.11.2011**
(21) Application number: 06835663.3
(22) Date of filing: 18.12.2006
(51) Int. Cl.: B21D 53/14, F16G 5/16

(54) **METHOD FOR MANUFACTURING A TRANSVERSE ELEMENT THAT IS DESTINED TO BE PART OF A PUSH BELT FOR A CONTINUOUSLY VARIABLE TRANSMISSION**
VERFAHREN ZUR HERSTELLUNG EINES QUERELEMENTS, DAS TEIL EINES SCHUBGLIEDERBANDS FÜR EIN STUFENLOSES GETRIEBE BILDEN SOLL
PROCÉDÉ DE FABRICATION D UN ELEMENT TRANSVERSAL DEVANT FAIRE PARTIE D UNE COURROIE DE POUSSÉE POUR TRANSMISSION VARIABLE EN CONTINU

(30) Priority: 19.12.2005 NL 1030702
(43) Date of publication of application: 17.09.2008
(73) Proprietor: ROBERT BOSCH GMBH, 70442 Stuttgart (DE)
(72) Inventor: PRINSEN, Lucas, Hendricus, Robertus, Maria, NL-5062 LV Oisterwijk (NL)
(74) Representative: Dekker-Garms, Alwine Emilie
(86) International application number: PCT/NL2006/000640
(87) International publication number: WO 2007/073159

(56) References cited:
- EP-A- 0 278 545
- EP-A- 1 132 648
- EP-A- 1 158 204
- EP-A- 1 287 924
- EP-A- 1 371 431
- EP-A1- 1 128 088
- WO-A-03/069185
- WO-A-03/072978
- WO-A-2005/054709

## Description

The invention relates to a method for manufacturing a transverse element that is destined to be part of a push belt for a continuously variable transmission, which transverse element has two bearing surfaces for supporting carriers of the push belt and two contact surfaces for establishing contact between the transverse element and pulleys of the continuously variable transmission, wherein a basic element is provided, and wherein the following operations are performed in the basic element:
- making a first number of cuts in order to obtain a first number of parts of a contour of the transverse element;
- exerting pressure at various positions at a main body surface of the basic element in order to shape a main body surface of the transverse element; and
- making a second number of cuts in order to obtain a second number of parts of the contour of the transverse element.

A push belt for a continuously variable transmission is generally known. Usually, such a push belt comprises two endless, ribbon-like carriers shaped like a closed loop for carrying a relatively large number of transverse elements. The transverse elements are arranged along the entire circumference of the carriers, wherein, during operation, they are able to transmit forces which are related to a movement of the push belt.
In the following description of the transverse element, the directions as mentioned refer to the situation in which the transverse element is part of the push belt. A longitudinal direction of the transverse element corresponds to a circumferential direction of the push belt. A vertical transverse direction of the transverse element corresponds to a radial direction of the push belt. A horizontal transverse direction of the transverse element corresponds to a direction perpendicular to both the longitudinal direction and the vertical transverse direction. The indication of any transverse element as subsequent transverse element or previous transverse element with respect to an adjacent transverse element is related to a direction of movement of the push belt.
In the horizontal transverse direction, at opposite sides, the transverse element is provided with recesses for receiving the carriers. For the purpose of supporting the carriers, the transverse element comprises bearing surfaces. In the horizontal transverse direction, at opposite sides, for the purpose of contact between the transverse element and pulley sheaves of a pulley of a continuously variable transmission, the transverse element is provided with contact surfaces, which are divergent in the direction of the bearing surfaces. The terms "top" and "bottom", which are hereinafter applied, are related to the direction of divergence; this is defined as being from bottom to top.
In the vertical transverse direction, from bottom to top, the transverse element comprises successively a basic portion, a neck portion and a top portion, wherein, in the horizontal transverse direction, the dimensions of the neck portion are relatively small. The basic portion comprises the bearing surfaces and the contact surfaces. In the push belt, the basic portion is located at the side of the inner circumference of the push belt, whereas the top portion is located at the side of the outer circumference of the push belt.
The transverse element has a first main body surface and a second main body surface, which are extending substantially parallel with respect to each other, substantially perpendicular to the longitudinal direction. The two main body surfaces have substantially the same contour, but a relief that is provided in each of the main body surfaces is different. At least a portion of the first main body surface of the transverse element is destined to contact at least a portion of the second main body surface or a subsequent transverse element in the push belt, whereas at least a portion of the second main body surface of the transverse element is destined to contact at least a portion of the first main body surface of a previous transverse element in the push belt. A circumferential surface, of which the bearing surfaces and the contact surfaces are part, is extending between the two main body surfaces.
The transverse element comprises a recessed portion, which constitutes a projection at a side of one of the main body surfaces, and which constitutes a hole at a side of another of the main body surfaces. Usually, the recessed portion is located in the top portion of the transverse element. In the push belt, the projection of any transverse element is at least partially located in the hole of an adjacent transverse element, so that a mutual displacement of the adjacent transverse elements in a plane perpendicular to the circumferential direction of the push belt is prevented.
In the push belt, two adjacent transverse elements are tiltable with respect to each other along a tilting line that is usually shaped as a highest line in the longitudinal direction of a convex transition surface in one of the main body surfaces, which constitutes an even and round transition of two portions of this main body surface which are oriented with respect to each other at a relatively small angle. Usually, the tilting line is extending in a top part of the basic portion. An important function of the tilting line is guaranteeing mutual contact between adjacent transverse elements which are located between the pulley sheaves of a pulley during operation of the push belt. The tilting line is intended to realize that the forces which are related to a movement of the push belt are transmitted from any transverse element to a subsequent transverse element in a controlled fashion.

A method for manufacturing transverse elements as described above is known from EP 0 278 545. According to the known method, the transverse elements are manufactured from a strip of basic material in two rows, wherein a number of steps are carried out. In the following, these steps will be described in relation to manufacturing two transverse elements which are located next to each other in a transverse direction of the strip. For sake of clarity, the transverse elements in the process of formation are referred to as basic elements.
Prior to carrying out the steps for manufacturing the transverse elements, centring holes are arranged in the longitudinal direction of the strip, at a regular mutual distance.
A first step of the known method for manufacturing.transverse elements on the basis of a strip of basic material is a cutting step that is carried out by applying three cutting dies, wherein a central portion of the strip is cut out, and wherein a portion of an edge of the strip is cut off at two sides of the strip. In this way, the major part of a top side of the top portion, a bottom side of the basic portion and a bottom side of the contact surfaces of the two transverse elements are obtained. The transverse elements are manufactured in the strip in a mirrored fashion, wherein the top sides of the transverse elements are directed towards each other.
A second step is a cutting step that is carried out by applying four cutting dies, wherein, at opposite sides of the basic elements, a joined whole consisting of a bottom side of the top portion, the neck portion, the bearing surface and a top portion of the contact surface is formed by cutting out two portions of the strip from both edges of the strip. In the process, material surrounding the centring holes is also removed, wherein only thin rings of material surrounding the central holes are left.
After the second step, almost the complete contour of the transverse elements, in a rough form, is ready. The two basic elements which are obtained after carrying out this step are only connected to each other and the rings of material surrounding the centring holes through two narrow strips which are extending from the top side of the top portion.
In a third step, a main body surface of the basic elements is processed by exerting pressure. In particular, shaping dies are pressed on the respective main body surface of the basic elements, and a desired relief is obtained in the respective main body surface under the influence of the exerted pressure. As a consequence of this operation, a bottom part of the basic portion is beveled off, and elevated parts are created at both the basic portion and the top portion.
In a fourth step, by applying shaping dies, the elevated parts at the basic portion and the top portion are calibrated. This means that the parts are flattened. Also, in the fourth step, a tilting line is formed at the main body surface.
A fifth step is a final processing step that is carried out by applying four dies, wherein parts of a bottom side of the basic portion, the bottom side of the top portion, the bearing surfaces and the contact surfaces are subjected to a final operation in order to obtain a desired accuracy of these parts of the contour of the transverse element. Also, during the fifth step, possible burrs which have been formed in previous steps are removed.
In a sixth step and a seventh step, at both sides of the basic elements, the bearing surfaces and the bottom side of the top portion are beveled off along their width by applying shaping dies. Also, in the seventh step, a recessed portion is arranged in the basic elements by locally exerting a high pressure on the basic elements by applying shaping dies. At one main body surface of the basic elements, the recessed portion manifests itself as a projection, and at another main body surface, the recessed portion manifests itself as a hole. The recessed portion is formed in the top portion of the basic elements. After the seventh step has been carried out, the transverse elements are completely formed.
In an eighth and final step, the transverse elements are cut loose from the strip by applying cutting dies. The transverse elements are then ready to be applied in a push belt.

It is an objective of the invention to improve the method for manufacturing transverse elements know from EP 0 278 545. Especially, it is an objective of the invention to provide a method, wherein the accuracy with which parts of the contour of the transverse elements, in particular the bearing surfaces and the contact surfaces are formed, is increased. This objective is achieved by means of a method for manufacturing a transverse element, wherein a basic element is provided, and wherein the following operations are performed in the basic element:
- making a first number of cuts in order to obtain a first number of parts of a contour of the transverse element;
- exerting pressure at various positions at a main body surface of the basic element in order to shape a main body surface of the transverse element; and
- making a second number of cuts in order to obtain a second number of parts of the contour of the transverse element, comprising the bearing surfaces and the contact surfaces of the transverse element; wherein the latter operation is performed after the other operations have been performed.
A substantial difference between the method according to the invention and the method known from EP 0 278 545 resides in the order of the steps. In the method known from EP 0 278 545, the bearing surfaces and the contact surfaces are already formed in then first and the second step. In the fifth step, these surfaces are subjected to a final operation, followed by other steps, in which, among other things, the recessed portion is arranged in the basic elements. As a result, according to an insight underlying the invention, the accuracy of the bearing surfaces and the contact surfaces, in particular of the shape of these surfaces and the mutual position of these surfaces in the transverse element is adversely influenced. Inaccuracy of the bearing surfaces and the contact surfaces may lead to a reduction of the life of the push belt in which the transverse elements are applied. For instance, inaccuracy of the bearing surfaces may lead to premature breaking of the carriers of the push belt.
According to the invention, the step of forming the parts of the contour which comprise the bearing surfaces and the contact surfaces is carried out no earlier than that other parts of the contour have been formed and a main body surface has been shaped under the influence of pressure. After forming the bearing surfaces and the contact surfaces, no further processing step is necessary, and, therefore, there is no danger that the accuracy with which the bearing surfaces and the contact surfaces have been formed is decreased.
On the basis of the foregoing, it is clear that when the method according to the invention is applied, the bearing surfaces and the contact surfaces of the transverse element are formed with a high accuracy, wherein this accuracy is guaranteed because of the fact that, after the bearing surfaces and the contact surfaces have been formed, the basic element from which the transverse element is manufactured is no longer subjected to operations in which a deformation of the basic element may occur under the influence of pressure. Moreover, less processing steps are needed as a consequence of the fact that the bearing surfaces and the contact surfaces are formed in an accurate fashion, wherein the accuracy is guaranteed.
For sake of completeness, in respect of the cutting steps, it is noted that these may be realized by applying known blanking techniques. It is not necessary to apply a blanking technique known as fine blanking, wherein, besides a cutting member, a supporting member needs to be present for the purpose of temporarily supporting a cut-out portion.
It is noted that EP 1 371 431 discloses a method for manufacturing a transverse element, which comprises a punching process, a coining process, and a punching process, in that order. During the first punching process, notched areas are provided on an outer periphery of a plate. During the coining process, the plate is coined, wherein, due to the presence of the notched areas, a material of the plate can flow more easily toward the periphery during the coining. During the second punching process, the plate is punched to form the transverse element.
An application of the method according to the invention will usually be directed at obtaining a transverse element having a usual appearance. In such a case, it is advantageous when shaping a main body surface of the transverse element by exerting pressure takes place in two phases, wherein, in a first phase, pressure is exerted in order to displace material of the basic element across the main body surface, as a result of which a predetermined relief is obtained in the main body surface, and wherein, in a second phase, pressure is exerted in order to form a recessed portion in the basic element, as a result of which a projection is obtained at one main body surface of the transverse element, and a hole is obtained in another main body surface of the transverse element. During the first phase, for example, the tilting line may be formed in the main body surface of the basic element.
In a practical application of the method according to the invention, cutting members such as cutting dies are applied for the purpose of making the cuts. Because of the fact that the recessed portion has already been formed in the basic element before the second number of cuts is made, it is possible to adapt positions of the cutting members to the position of the recessed portion for the purpose of making these cuts. In particular, a positioning member connected to the cutting members may be applied, that is inserted into the recessed portion, at the side where the recessed portion manifests itself as a hole. The positioning member may be a conical centring pin, for example. Applying a positioning member that is destined to be inserted into the recessed portion is a simple manner of doing something to realize an adaptation of the positions of the bearing surfaces and the contact surfaces to the position of the recessed portion, which yields accurate results.
Within the framework of the invention, in making the second number of cuts, it is possible to choose a technique that is known as finish cutting, wherein a contour of the basic element is cut in a more accurate fashion to obtain the desired contour of the transverse element, or a technique that is known as full cutting, wherein the major part of portions of the basic element which are being cut loose are surrounded by material prior to the process of cutting. When the technique of finish cutting is applied, the contour is already cut in a rougher form in a previous step. This is not necessary in full cutting. Additionally, full cutting has more advantages, wherein an important advantage is that a more accurate cutting result is obtained because of the fact that the applied cutting members are more evenly loaded, as not only an edge is cut off from the basic element. Also, in full cutting, the material composition in the basic element is less critical.
In an advantageous embodiment, the basic element of which the transverse element is manufactured is part of a carrier that comprises more than one basic element. In such a case, after the step of making the second number of cuts for the purpose of forming the bearing surfaces and the contact surfaces of the transverse element, a step follows in which the transverse element is detached from the carrier. For example, after making the second number of cuts, the transverse element is still connected to the carrier at the end of a top portion in which at least a part of the recessed portion is located.
A strip-shaped carrier is known from EP 0 278 545, and within the framework of the invention, it is also possible to apply such a carrier. An advantage of applying a strip-shaped carrier is that it is possible to apply processing stations disposed next to each other for the purpose of carrying out successive processing steps, wherein the basic elements are transported from the one processing station to a next processing station by simply displacing the carrier with respect to the processing stations. Thus, it is possible that basic elements which are successively positioned in a longitudinal direction of the carrier are subjected to successive processes. Moreover, a more efficient process may be realized when the successive processes are carried out simultaneously in basic elements which are successively positioned in the longitudinal direction. In that case, basic elements in different stages are successively positioned in the carrier, wherein each time that the carrier is displaced, one or more transverse elements which are ready are present at the end of the carrier, wherein the number of transverse elements is dependent on the number of rows of basic elements that is present in the carrier in the longitudinal direction of the carrier.
In a preferred embodiment, in the transverse direction, the carrier has pairs of transverse elements. In such a case, preferably, strips of material of the carrier, which are extending between the basic elements of the pairs of basic elements, are left intact until the basic elements are detached from the carrier. In this way, a stiffness of the carrier in the longitudinal direction is guaranteed, which has a positive influence on the accuracy with which the various processing steps may be carried out. This accuracy is also positively influenced when the basic elements of each pair are simultaneously subjected to the same operation, because, in that case, a symmetrical loading of the carrier is realized in the transverse direction.

It is highly advantageous if the carrier is provided with centring holes at positions which are located between the pairs of basic elements in the longitudinal direction. Such is a carrier may easily and accurately be positioned with respect to the various processing stations, wherein, in a manner known per se, use is made of members which are inserted into the centring holes, such as centring pins.
Besides to a method for manufacturing a transverse element as described above, the invention relates to a device that is adapted to carry out this method and to a push belt for a continuously variable transmission, which is provided with transverse elements which have been manufactured by applying this method.

The invention will be further explained on the basis of the following description of the invention with reference to the drawing, in which equal reference signs indicate equal or similar components, and in which:
figure 1 diagrammatically shows a continuously variable transmission having a push belt;
figure 2 and figure 3 diagrammatically show different views of a transverse element for a push belt for a continuously variable transmission;
figure 4 diagrammatically shows a carrier having basic elements in different stages of processing according to a first way in which the method according to the invention may be carried out;
figure 5 shows a first detail of the carrier shown in figure 4;
figure 6 shows a second detail of the carrier shown in figure 4;
figure 7 shows a third detail of the carrier shown in figure 4;
figure 8 shows a fourth detail of the carrier shown in figure 4;
figure 9 diagrammatically shows a carrier having basic elements in different stages of processing according to a second way in which the method according to the invention may be carried out;
figure 10 shows a first detail of the carrier shown in figure 9;
figure 11 shows a second detail of the carrier shown in figure 9;
figure 12 shows a third detail of the carrier shown in figure 9; and
figure 13 shows a fourth detail of the carrier shown in figure 9.

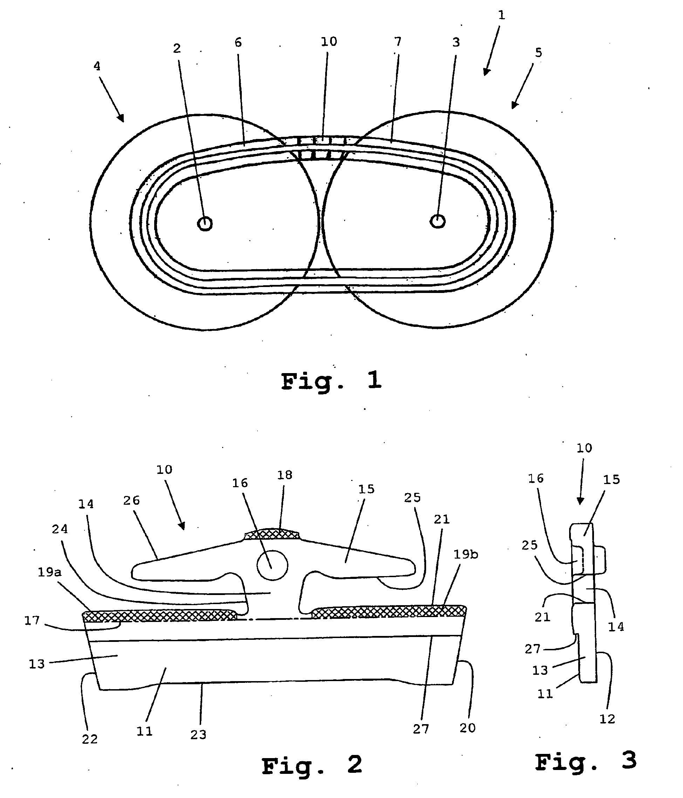

Figure 1 diagrammatically shows a continuously variable transmission, such as for utilization in a motor vehicle. The continuously variable transmission is indicated in general by the reference sign 1.
The continuously variable transmission 1 comprises two pulleys 4, 5 which are arranged on separate pulley shafts 2, 3. An endless push belt 6 being shaped like a closed loop is arranged around the pulleys 4, 5, and serves for transmitting torque between the pulley shafts 2, 3. Each of the pulleys 4, 5 comprises two pulley sheaves, wherein the push belt 6 is positioned and clamped between said two pulley sheaves, so that a force may be transmitted between the pulleys 4, 5 and the push belt 6 with the help of friction.
The push belt 6 comprises at least one endless carrier 7, which is usually composed of a number of rings. Along the entire length of the carrier 7, transverse elements 10 are arranged, wherein the transverse elements 10 are mutually adjacent to each other and are moveable with respect to the carrier 7 in the circumferential direction. For the sake of simplicity, only a number of these transverse elements 10 is shown in figure 1.

Figures 2 and 3 show a transverse element 10. A first main body surface of the transverse element 10 is indicated in general by the reference sign 11, whereas a second main body surface of the transverse element 10 is indicated in general by the reference sign 12. A circumferential surface 20 is extending between the main body surfaces 11, 12.
In the vertical transverse direction, the transverse element 10 comprises successively a basic portion 13, a relatively narrow neck portion 14 and a top portion 15. In the push belt 6, the basic portion 13 is located at the side of the inner circumference of the push belt 6, whereas the top portion 15 is located at the side of the outer circumference of the push belt 6. Furthermore, in a push belt 6, at least a portion of the first main body surface 11 of the transverse element 10 contacts at least a portion of the second main body surface 12 of a subsequent transverse element 10, whereas at least a portion of the second main body surface 12 of the transverse element 10 contacts at least a portion of the first main body surface 11 of a preceding transverse element 10.
At the transition to the neck portion 14, the basic portion 13 of the transverse element 10 as shown in figure 2 comprises two bearing surfaces 21 which serve for supporting two carriers 7 of the push belt 6. Furthermore, the basic portion 13 comprises two contact surfaces 22. When the transverse element 10 moves over a pulley 4, 5 during operation of the push belt 6, contact between the transverse element 10 and contact surfaces of the pulley sheaves of the pulley 4, 5 is realized through the contact surfaces 22. A bottom surface 23 is extending between the contact surfaces 22. The bearing surfaces 21, the contact surfaces 22, as well as the bottom surface 23 are part of the circumferential surface 20. Other parts of the circumferential surface 20 are neck surfaces 24 which are located at the neck portion 14, retaining surfaces 25 which are extending at a bottom side of the top portion 15, and which, as a consequence, are located opposite to the bearing surfaces 21, and top surfaces 26 which are extending at a top side of the top portion 15. In respect of the retaining surfaces 25, it is noted that when the transverse element 10 is arranged in a push belt 6, a space in which the carriers 7 are located is delimited in a radial direction by the bearing surfaces 21 at one side and by the retaining surfaces 25 at another side.
In the first main body surface 11 of the transverse element 10, a recessed portion 16 is arranged, which manifests itself as a hole at the side of the first main body surface 11, and which manifests itself as a projection at the side of the second main body surface 12. In figure 3, the hole is depicted by means of a dashed line. In the shown example, a major part of the recessed portion 16 is located at the top portion 15. In the push belt 6, the projection of the recessed portion 16 of the transverse element 10 is at least partially located in the hole of the recessed portion 16 of an adjacent transverse element 10. The recessed portions 16 serve to prevent mutual displacement of the adjacent transverse elements 10 in a plane perpendicular to the circumferential direction of the push belt 6.
A tilting line 17 is defined at the first main body surface 11 of the transverse element 10. In figure 2, the tilting line 17 is indicated by a dash and dot line. In the shown example, the tilting line 17 is extending along the entire width of the transverse element 10, wherein the tilting line 17 is located at a lightly convexly curved area at the basic portion 13 of the transverse element 10. An important function of the tilting line 17 is guaranteeing mutual contact between two adjacent transverse elements 10 when, during a movement of the push belt 6, said transverse elements 10 are moving over one of the pulleys 4, 5, for example.

Furthermore, at the first main body surface 11 of the transverse element 10, three contact areas 18, 19a, 19b are located, which are depicted as hatched areas in figure 2. The contact areas 18, 19a, 19b are realized as slight elevations with respect to the first main body surface 11, and serve for establishing contact of the transverse element 10 to an adjacent transverse element 10 in a push belt 6. A first contact area 18 is located at the top portion 15 of the transverse element 10, and is situated above the recessed portion 16. Two other contact areas 19a, 19b are located at the basic portion 13 of the transverse element 10, wherein both contact areas 19a, 19b are partially delimited by a portion of a bearing surface 21 and a portion of a contact surface 22 connected thereto.
Within the framework of the invention, the transverse element 10 may have other features than described above. For instance, it is not at all necessary that the contact areas 18, 19a, 19b are present at the first main body surface 11 of the transverse element 10.

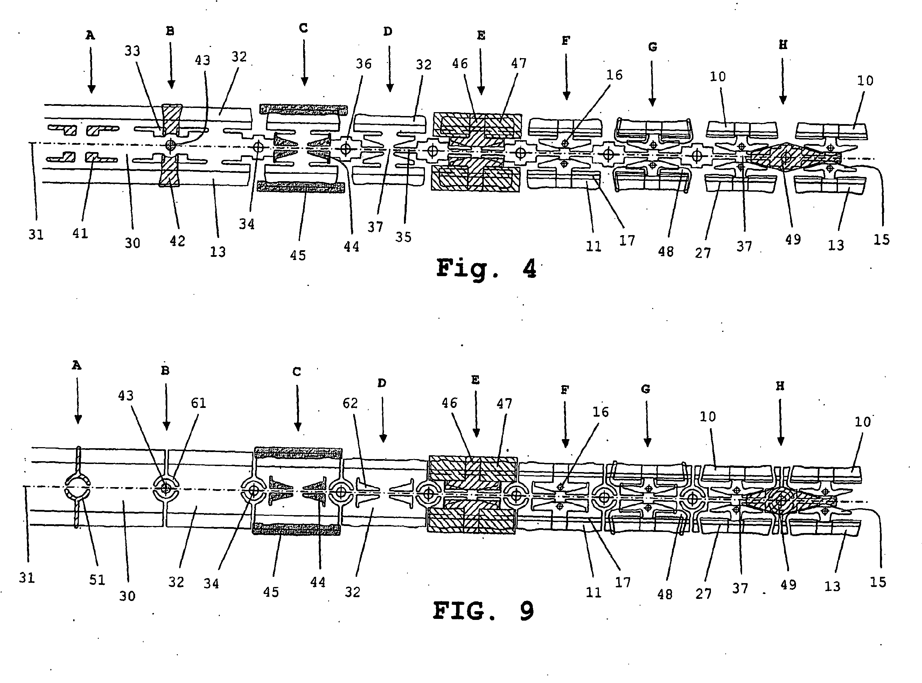

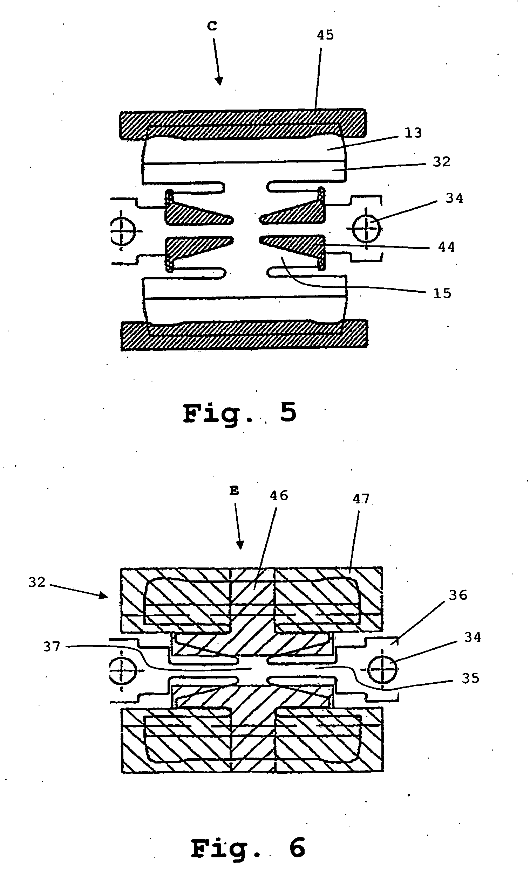

In the following, a first way in which the method according to the invention may be carried out will be explained on the basis of figures 4-8. In figure 4, a chronological overview, as it were, is given of the different steps which are carried out according to the first method in order to realize the transverse element 10. In each of the figures 5-8, an illustration of one of the steps of the first method is depicted, in an enlarged fashion.
In figure 4, a carrier 30 is shown, which is shaped as a strip of material from which the transverse elements 10 are formed. In general, it is true that the transverse elements 10 are manufactured of metal. In the figure, it is clearly visible that the transverse elements 10 are formed in a number of steps, in two rows which are extending in the longitudinal direction of the carrier 30. The transverse elements 10 are formed in pairs, wherein the top portions 15 of the transverse elements 10 are directed towards each other, and wherein the basic portions 13 of the transverse elements 10 are located at the side of an edge of the carrier 30. Therefore, the various operations which are performed on the carrier 30 are taking place at opposite sides of a central axis 31 of the carrier 30, and are performed in a mirror-symmetrical fashion. For the sake of the following description, the transverse elements 10 in the process of formation are referred to as basic elements 32.

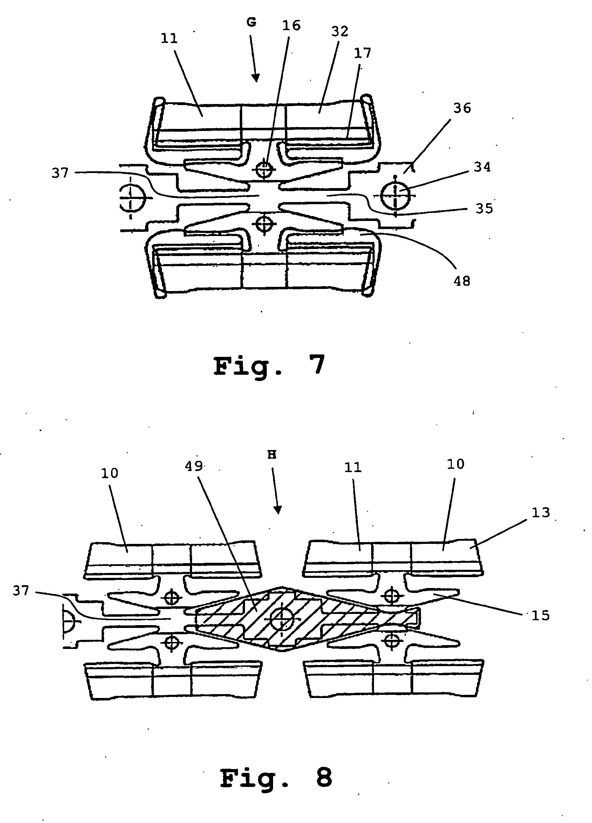

In a first step of the first method according to the invention, which is illustrated in a section of figure 4 that is indicated by the letter A, four portions are blanked out of the carrier 30 under the influence of four cutting dies 41. Because of this, the recesses of four basic elements 32, which are delimited by the bearing surfaces 21, the neck surfaces 24 and the retaining surfaces 25, are made in the carrier 30, in a rough form. The recesses in rough form are indicated by the reference numeral 33.
In a second step of the first method according to the invention, which is illustrated in a section of figure 4 that is indicated by the letter B, two portions are blanked out of the carrier 30 under the influence of two cutting dies 42. In particular, in this step, free passages between the recesses 33 of two basic elements 32 which are adjacent in the longitudinal direction are created, starting from the edges of the carrier 30. In the process, the basic portions 13 of two basic elements 32 which are adjacent in the longitudinal direction are detached from each other. Also, by applying a round cutting die 43, a centring hole 34 is blanked out of the carrier 30, wherein the.centring hole 34 is arranged at a position between the recesses 33, so that the centring hole 34 is located on the central axis 31 of the carrier 30, between basic elements 32 which are adjacent in the longitudinal direction. The centring hole 34 is used in positioning the carrier 30 for the purpose of the various processing steps, and is suitable for receiving a centring pin or the like.
In a third step of the first method according to the invention, which is illustrated in a section of figure 4 that is indicated by the letter C, and which is also illustrated in figure 5, four portions are cut out of the carrier 30 under the influence of four cutting dies 44, wherein the major part of the top surfaces 26 of two opposite basic portions 32 is formed, with the exception of a top part. After this step has been carried out, the top portions 15 having the top surfaces 26 and the retaining surfaces 25 in rough form are almost completely free from the other parts of the carrier 30. Also, in the third step, portions at the edges of the carrier 30 are cut away under the influence of two cutting dies 45, wherein the bottom surfaces 23 of the basic portions 32 are formed. The result that is obtained after carrying out the third step is depicted in a section of figure 4 that is indicated by the letter D. Nothing else than a strip-shaped part 35 that is extending in the longitudinal direction between two successive parts 36 of the carrier 30 having a centring hole 34, between the basic elements 32, remains of the carrier 30 after carrying out this step. A central portion of the strip-shaped part 35 constitutes a connecting element 37 that connects the two basic elements 32 of a pair of basic elements 32.
In a fourth step of the first method according to the invention, which is illustrated in a section of figure 4 that is indicated by the letter E, and that is also illustrated in figure 6, a shaping die 46, 47 is pressed on the carrier 30, at very turn on opposite sides of the central axis 31, wherein the two opposite basic elements 32 are covered by the shaping dies 46, 47. In this example, the shaping dies 46, 47 comprise two die parts 46, 47, including a T-shaped die part 46. Shaping surfaces of the die parts 46, 47 directed towards the basic part 32 are positioned at a different height, whereby a desired relief is realized in the first main body surface 11 of the basic elements 32. Furthermore, each of the die parts 46, 47 may be provided with a relief that is suitable to realize a desired relief in the first main body surface 11 of the basic elements 32 under pressure. In particular, during the fourth step, the elevated contact areas 18, 19a, 19b at the first main body surface 11 of the basic elements 32 are realized by an elevated position of the T-shaped die part 46 with respect to the other die part 47, and the tilting line 17 is formed in the first main body surface 11 by a corresponding relief in the shaping surface of at least this other die part 47.
In a fifth step of the method according to the invention, which is illustrated in a section of figure 4 that is indicated by the letter F, the recessed portion 16 is formed in the basic elements 32 by exerting local pressure on the first main body surface 11 of the basic elements 32.
In a sixth step of the first method according to the invention, which is illustrated in a section of figure 4 that is indicated by the letter G, and which is also illustrated in figure 7, a large part of the contour of the transverse elements 10, namely a continuous whole of contact surface 22, bearing surface 21, neck surface 24 and retaining surface 25, is formed by applying four cutting dies 48. To this end, the two basic elements 32 are subjected to a treatment that is known as finish cutting. This means that at the position of the surfaces 21, 22, 24, 25 which are to be formed, portions of the edges of the basic elements 32 are cut off. Each cutting die 48 serves to form a set of contact surface 22, bearing surface 21, neck surface 24 and retaining surface 25.
In positioning the cutting dies 48, use is made of the recessed portion 16 that has been realized in the basic elements 32 in the fifth step. For example, the cutting dies 48 are connected to a conical centring pin that is inserted into the recessed portion 16. In this way, it is achieved that the position of the part of the contour having the contact surface 22, the retaining surface 21, the neck surface 24 and the retaining surface 25 is accurately adapted to the position of the recessed portion 16. Because of the fact that the said part of the contour is formed at two sides of the basic elements 32 by applying one cutting die 48, a very accurate adaptation of the positions of the respective surfaces 21, 22, 24, 25 between them is also achieved.
After carrying out the sixth step, the transverse elements 10 are ready, wherein the top portions 15 of the transverse elements 10 of a pair of transverse elements 10 are connected to each other through a connecting element 37. In a seventh step of the first method according to the invention, a pair of transverse elements 10 that is located more at the front and a part of the carrier 30 connected thereto is cut loose from this connecting element 37. Subsequently, in an eighth step of the first method according to the invention, the transverse elements 10 are cut loose from the connecting element 37. The seventh and eighth step are illustrated in a section of figure 4 that is indicated by the letter H, which is depicted in an enlarged fashion in figure 8. There steps are carried out simultaneously in successive pairs of transverse elements 10 by applying a single cutting die 49, wherein a pair of transverse elements 10 that is located more at the front is situated at a free end of the carrier 30. To this end, the cutting die 49 is adapted to cut away a part of the carrier 30 that is extending from the connecting element 37 between the pair of transverse elements 10 that is located more behind to the connecting element 37 between the pair of transverse elements 10 that is located more at the front. In the process, the transverse elements 10 of the pair that is located more at the front become free, and the pair of transverse elements 10 that is located more behind gets situated at the free end of the carrier 30, after which the transverse elements 10 of this pair may be cut loose from the intermediate connecting element 37 by applying the cutting die 49.

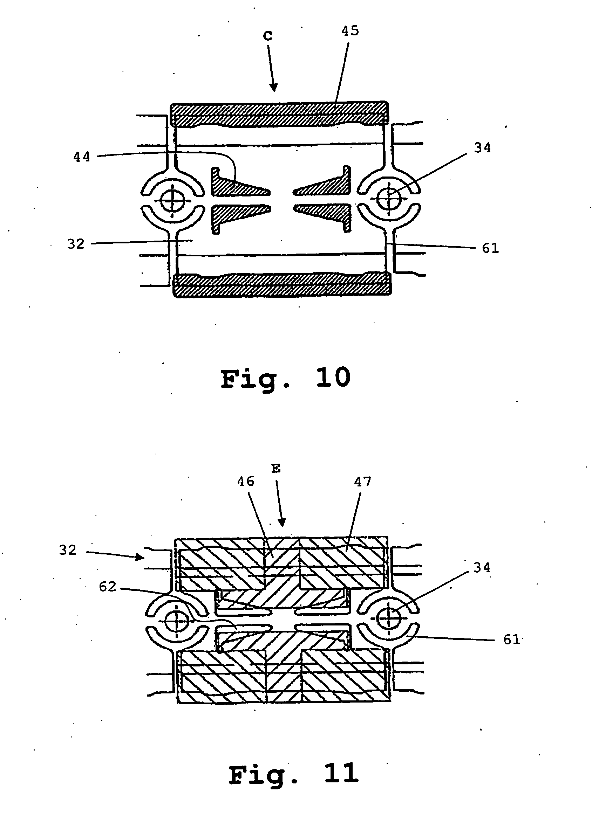

In the following, a second way in which the method according to the invention may be carried out will be explained on the basis of figures 9-13. In figure 9, a chronological overview, as it were, is given of the different steps which are carried out according to the second method in order to realize the transverse element 10. In each of the figures 10-13, an illustration of one of the steps of the second method is depicted, in an enlarged fashion.
In the second way in which the method according to the invention may be carried out, use is made of a strip-shaped carrier 30 as well, from which the transverse elements 10 are formed in pairs. Also in this case, the various operations which are performed on the carrier 30 are taking place at opposite sides of a central axis 31 of the carrier 30, wherein the operations are performed in a mirror-symmetrical fashion.
In a first step of the second method according to the invention, which is illustrated in a section of figure 9 that is indicated by the letter A, two portions are blanked out of the carrier 30 under the influence of two cutting dies 51. In particular, recesses 61 having straight slots and portions which are shaped like a part of a ring are formed, wherein the slots are extending from the edges of the carrier 30, substantially perpendicular to the longitudinal direction of the carrier 30, wherein the portions which are shaped like a part of a ring are located in the vicinity of the central axis 31 of the carrier 30, and wherein the slots are connected to these portions. For sake of clarity, the recesses 61 which are formed in the first step will hereinafter be referred to as intermediate recesses 61. Within the framework of the invention, it is not necessary that the intermediate recesses 61 are formed with straight slots and portions which are shaped like a part of a ring. For instance, the latter portions may also be U-shaped or V-shaped.
In a second step of the second method according to the invention, which is illustrated in a section of figure 9 that is indicated by the letter B, a centring hole 34 is blanked in the carrier 30 by applying a round cutting die 43, wherein the centring hole 34 is made at a position between the portions of the intermediate recesses 61 which are formed as a part of a ring, so that the centring hole 34 is located at the central axis 31 of the carrier 30.

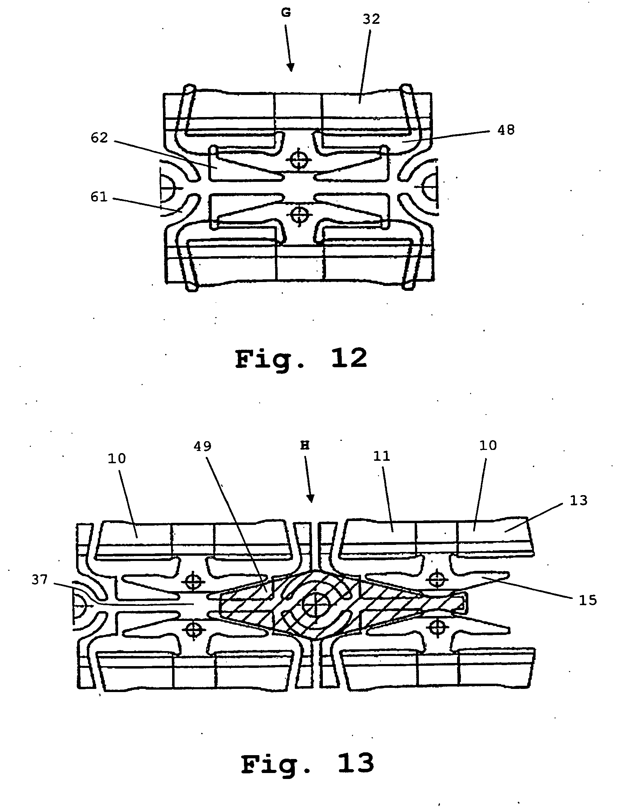

In a third step of the second method according to the invention, which is illustrated in a section of figure 9 that is indicated by the letter C, and which is also illustrated in figure 10, four portions are cut out of the carrier 30 under the influence of four cutting dies 44 in an area of the carrier 30 that is located between two centring holes 34, wherein the major part of the top surfaces 26 of two opposite basic portions 32 is formed, with the exception of a top part. The four recesses which are formed in the process, are indicated by the reference numeral 62. Also, in the third step, portions at the edges of the carrier 30 are cut away under the influence of two cutting dies 45, wherein the bottom surfaces 23 of the basic portions 32 are formed. The result that is obtained after carrying out the third step is depicted in a section of figure 9 that is indicated by the letter D.
An important difference between the first method and the second method becomes clear when the section D of figure 4 is compared to the section D of figure 9. According to the first method, after carrying out the third step, almost the complete contour of the transverse element 10 is ready, partially in a rough form. In that case, the only place where the contour is not yet formed is the place where the basic element 32 is connected to the carrier 30 through the connecting element 37. However, according to the second method, after the third step, only the bottom surface 23 and the major part of the top surface 26 are ready. Therefore, in the second method, more of the carrier 30 is involved in the steps which are following the third step.
A fourth step of the second method according to the invention, which is illustrated in a section of figure 9 that is indicated by the letter E, and that is also illustrated in figure 11, is similar to the fourth step of the first method. In a comparable manner, a fifth step of the method according to the invention, which is illustrated in a section of figure 9 that is indicated by the letter F, is similar to the fifth step of the first method.
It may be so that relatively much material of the carrier 30 is being present around the basic elements 32, but enough material has been removed at strategic places in order to allow for a displacement of material in a direction of the width of the basic elements 32. For instance, a small widening of the basic portion 13 is allowed for at the position of the intermediate recesses 61, while a small widening of the top portion 15 is allowed for at the position of the top recesses 62.
In a sixth step of the second method according to the invention, which is illustrated in a section of figure 9 that is indicated by the letter G, and which is also illustrated in figure 12, a large part of the contour of the transverse elements 10 is formed by applying four cutting dies 48, namely a continuous whole of contact surface 22, bearing surface 21, neck surface 24 and retaining surface 25. After this step, the complete contour of the transverse elements 10 is obtained, with the exception of a top part of the top surface 26 that is connected to material of the carrier 30.
During the time that the cutting dies 48 are performing their cutting action, they are almost completely surrounded by material. Therefore, the cutting action that is performed is also referred to as full cutting, wherein a portion of the carrier 30 is actually cut loose out of a surrounding area. This is different than finish cutting that is applied in the first method, wherein the contour of the transverse elements 10 is already present in a rough form, and wherein an edge of this rough form is cut off from the contour. A disadvantage of finish cutting is that this cutting technique is not well applicable to all types of material which are suitable for the transverse elements 10. In the case of full cutting, there is more freedom in choice of material. Furthermore, in full cutting, there is a higher stiffness, because of more material being present, which helps in increasing the accuracy with which the cutting is performed.
As has already been described in relation to the first method, in positioning the cutting dies 48, use is made of the recessed portion 16 that has been realized in the basic elements 32 in the fifth step.
After carrying out the sixth step, the transverse elements 10 are ready, wherein the top portions 15 of the transverse elements 10 of a pair of transverse elements 10 are connected to each other through a connecting element 37. By carrying out a seventh and an eighth step as described in relation to the first method, the transverse elements 10 are detached from the carrier 30, after which the transverse elements 10 can be placed in a push belt 6. The seventh and eighth step of the second method are illustrated in a section of figure 9 that is indicated by the letter H, which is depicted in an enlarged fashion in figure 13. A difference between the first and the second method relates to the shape of the part of the carrier 30 that is cut loose in the seventh step. In the second method, this part of the carrier 30 comprises strips of material which are extending on opposite sides of the slot of the intermediate recess 61.
The intermediate recesses 61 do not only have a function in allowing for a small widening of the basic portion 13 of the basic elements 32 during the fourth step. Another function of the intermediate recesses 61 is guaranteeing symmetrical conditions at opposite side of an axis of symmetry of the basic elements 32, so that a situation in which there is a higher stiffness at one side of the basic elements 32 than at another side is prevented. Because of this, the accuracy of the various processing steps is increased. Yet another function of the intermediate recesses 61 is decreasing the stiffness of the strip 30 in a direction perpendicular to the longitudinal direction of the strip 30. Because of this, it is achieved that parts of the strip 30 which are extending between the centring holes 34 are movable with respect to each other, and additionally are capable of following the position that is dictated by the position of the centring pins or the like which are inserted into the centring holes 34.

In the sixth step of the methods as described above, a large part of the contour of the transverse element 10, namely the part having the contact surface 22, the bearing surface 21, the neck surface 24 and the retaining surface 25 is cut. In the first method, a rough form has already been cut, and the technique of finish cutting is applied. In the second method, that is not the case, and the technique of full cutting is applied. A variant of the method according to the invention is also feasible, wherein a considerable part has already been removed between the basic portions 13 of the basic elements 32 at an earlier stage, so that a rough form of the contact surface 22 is obtained. Subsequently, in the sixth step, the contact surface 22 is cut by finish cutting the rough form, whereas the bearing surface 21, the neck surface 24 and the retaining surface 25 are cut by means of cutting in full material.
A major advantage of the above-described methods is found in the accuracy with which important surfaces of which the shape and the surface quality are critical are formed. A first factor playing a role in this is that the part of the contour having the contacts surface 22, the bearing surface 21, the neck surface 24 and the retaining surface 25 is realized in one cutting movement. A second factor playing a role in this is that this part of the contour is formed no earlier than that other parts of the contour have been formed and the first main body surface 11 of the basic element 32 has been shaped under pressure. A third factor playing a role in this is that strips of material of the carrier 30 between the centring holes 34 are left intact up to and including the sixth step, which function as tension rods with which stiffness in the longitudinal direction is obtained.
Surfaces of transverse elements 10 which have been manufactured by applying the method according to the invention have a high accuracy. However, within the framework of the invention, it is not excluded that the transverse elements 10 are subjected to any finishing operation. In case it is desired to leave the transverse elements 10 connected to the carrier 30 for the purpose of one or more finishing operations, the seventh and the eighth step may be omitted, or postponed in any case.
In view of the importance of an even loading of the basic elements 32 in respect of the accuracy, it is advantageous when the basic elements 32 of a pair are simultaneously subjected to one and the same operation at every occasion. Despite of this, this is not essential within the framework of the invention. Different parts of the carrier 30 in the longitudinal direction may be simultaneously subjected to different treatments in order to let the manufacturing process of the transverse elements 10 take place in an efficient fashion. However, this is also not essential.
Within the framework of the present invention, it is not necessary to make use of a carrier 30. The basic elements 32 may also be separately processed. However, applying the carrier 30 has a number of important advantages, including the fact that the transport of the basic elements 32 is facilitated. Moreover, in general, it is easier to position the basic elements 32 when they are connected to a carrier 30, than when this is not the case.
When a carrier 30 is applied, there are various possibilities for the positioning of the transverse elements 10 in the carrier 30, including the possibilities as already described in the foregoing. Other possibilities comprise being directed towards each other of the basic portions 13 of the transverse elements 10 in case the transverse elements 10 are formed in pairs, positioning of the transverse elements 10 in a single row or in more than two rows in the longitudinal direction of the carrier 30, and asymmetrical positioning of the transverse elements 10 with respect to a central axis 31 of the carrier 30. Also, the transverse elements 10 may remain connected to the carrier 30 at one or more places than at a top part of the top surface 26 until the transverse elements 10 are completely separated from the carrier 30 in a last step.

It is noted that it is advantageous when the first main body surface 11 of the transverse element 10 has a stepped shape, as shown in figures 2 and 3, wherein two areas of the main body surface 11 are extending at different levels and are connected to each other through a step 27. In that case, an area of the main body surface 11 at a bottom part of the basic portion 13 of the transverse element 10 is recessed with respect to another area of the main body surface 11, as a result of which undesired contact between the bottom parts of the basic portions 13 of adjacent transverse elements 10 which are present in a push belt 6, and which, in the push belt 6, are moving over a pulley 4, 5 of a continuously variable transmission 1, is prevented.
Within the framework of the present invention, it is possible that for the purpose of manufacturing transverse elements 10 by applying the method according to the invention, a strip-shaped carrier 30 that has already at least one step is applied, wherein the step is extending in the longitudinal direction of the carrier 30. However, it is also possible that a non-stepped carrier 30 is used, wherein the method according to the invention comprises a step for realizing the desired step 27. Preferably, this step comprises applying a shaping die (not shown), for example a shaping die having at least two die parts of which the shaping surfaces are positioned at different heights, positioning the shaping die with respect to the carrier 30, and exerting pressure on the carrier 30.
A step of forming a step 27 in the basic elements 32 may for example be carried out between the second step and the third step of the methods which have been described in the above on the basis of figures 4-13. Apart from that, these figures 4-13 relate to a situation in which a stepped carrier 30 is taken as initial material, and therefore, the step 27 is shown in each of these figures. It is also possible that the step 27 is formed during carrying out the fourth step of the methods, which is aimed at realizing a desired relief in the first main body surface 11 of the basic elements 32 under pressure.
The step of realizing the step 27 in the basic elements 32 does not necessarily need to be part of the method according to the invention. For example, it is also possible that this step is carried out prior to another manufacturing process of transverse elements 10, for example a process in which fine blanking techniques are applied to blank the transverse elements 10 out of basic material, wherein, besides a cutting member, a supporting member is applied for temporarily supporting a cut-out portion.

It will be clear to a person skilled in the art that the scope of the present invention is not limited to the examples discussed in the foregoing, but that several amendments and modifications thereof are possible without deviating from the scope of the invention as defined in the attached claims.

In the foregoing, it has been described that a transverse element 10 that is destined to be part of a push belt 6 for a continuously variable transmission 1 is manufactured of a basic element 32 that comprises a portion of a strip-shaped carrier 30. During the manufacturing process, various cutting operations and shaping operations are performed in the basic element 32. A first cutting operation is aimed at obtaining a first part of the contour of the transverse element 10. Shaping operations are aimed at realizing a desired relief at a main body surface 11, 12 of the transverse element 10, wherein a recessed portion 16 is also realized in the transverse element 10. A second cutting operation is aimed at obtaining a second part of the contour of the transverse element 10 that, in any case, comprises the bearing surfaces 21 for supporting carriers 7 of the push belt 6 and the contact surfaces 22 for establishing contact to pulleys 4, 5 of the continuously variable transmission 1. Because of the fact that this second cutting operation is performed no earlier than that the other said operations have been performed, it is achieved that the formation of the bearing surfaces 21 and the contact surfaces 22 takes place with a high accuracy.

## Claims

1. Method for manufacturing a transverse element (10) that is destined to be part of a push belt (6) for a continuously variable transmission (1), which transverse element (10) has two bearing surfaces (21) for supporting carriers (7) of the push belt (6) and two contact surfaces (22) for establishing contact between the transverse element (10) and pulleys (4, 5) of the continuously variable transmission (1), wherein a basic element (32) is provided, and wherein the following operations are performed in the basic element (32):
- making a first number of cuts in order to obtain a first number of parts of a contour of the transverse element (10);
- exerting pressure at various positions at a main body surface (11, 12) of the basic element (32) in order to shape a main body surface (11, 12) of the transverse element (10); and
- making a second number of cuts in order to obtain a second number of parts of the contour of the transverse element (10), comprising the bearing surfaces (21) and the contact surfaces (22) of the transverse element (10);
wherein the latter operation is performed after the other operations have been performed.

2. Method according to claim 1, wherein shaping of a main body surface (11, 12) of the transverse element (10) by exerting pressure takes place in two phases, wherein, in a first phase, pressure is exerted in order to displace material of the basic element (32) across the main body surface (11, 12), whereby a predetermined relief is obtained in the main body surface (11, 12), and wherein, in a second phase, pressure is exerted in order to form a recessed portion (16) in the basic element (32), as a result of which a projection is obtained at one main body surface (11, 12) of the transverse element (10), and a hole is obtained at another main body surface (11, 12) of the transverse element (10).

3. Method according to claim 2, wherein, for the purpose of making the second number of cuts, cutting members (48) are applied, and wherein positions of the cutting members (48) with respect to the basic element (32) are adapted to a position of the recessed portion (16) that is formed in the basic element (32).

4. Method according to claim 3, wherein, for the purpose of positioning the cutting members (48) with respect to the basic element (32), a positioning member connected to the cutting members (48) is applied, that is inserted into the recessed portion (16) that is formed in the basic element (32).

5. Method according to any of claims 1-4, wherein shaping a main body surface (11, 12) of the transverse element (10) by exerting pressure comprises making a step (27) in the main body surface (11, 12) .

6. Method according to any of claims 1-5, wherein making the second number of cuts involves cutting loose portions of the basic element (32), and wherein, prior to the process of cutting loose, the major part of these portions is surrounded by material.

7. Method according to any of claims 1-6, wherein the basic element (32) from which the transverse element (10) is manufactured is part of a carrier (30) that comprises more than one basic element (32).

8. Method according to claim 7, wherein the traverse element (10) is eventually obtained by detaching the basic element (32) from the carrier (30) after making the second number of cuts.

9. Method according to claim 7 or 8, wherein, after making the second number of cuts, the basic element (32) is connected to the carrier (30) at an end of a top portion (15) in which at least a part of the recessed portion (16) is located.

10. Method according to any of claims 7-9, wherein the carrier (30) is formed like a strip, wherein basic elements (32) which are successively positioned in a longitudinal direction of the carrier (30) are subjected to successive processes.

11. Method according to claim 10, wherein the successive processes are performed in basic elements (32) which are successively positioned in the longitudinal direction.

12. Method according to claim 10 or 11, wherein, in a transverse direction, the carrier (30) has pairs of basic elements (32), wherein, in a longitudinal direction, strips of material (35) of the carrier (30) which are extending between the basic elements (32) of the pairs of basic elements (32) are left intact until the basic elements (32) are detached from the carrier (30).

13. Method according to claim 12, wherein the carrier (30) is provided with centring holes (34) at positions which are located between the pairs of basic elements (32) in a longitudinal direction.

## Patentansprüche

1. Verfahren zur Herstellung eines Querelements (10), das als Teil eines Schubriemens (6) für ein stufenloses Getriebe (1) vorgesehen ist, wobei das Querelement (10) zwei Auflageflächen (21) zum Abstützen von Trägern (7) des Schubriemens (6) und zwei Kontaktflächen (22) zum Herstellen von Kontakt zwischen dem Querelement (10) und Riemenscheiben (4, 5) des stufenlosen Getriebes (1) aufweist, wobei ein Basiselement (32) vorgesehen ist und wobei die folgenden Arbeitsgänge an dem Basiselement (32) verrichtet werden:
- Herstellen einer ersten Anzahl von Ausnehmungen, um eine erste Anzahl von Abschnitten einer Kontur des Querelements (10) zu erhalten,
- Aufbringen von Druck an verschiedenen Positionen an einer Hauptteilfläche (11, 12) des Basiselements (32), um eine Hauptteilfläche (11, 12) des Querelements (10) zu formen, und
- Herstellen einer zweiten Anzahl von Ausnehmungen, um eine zweite Anzahl von Abschnitten der Kontur des Querelements (10) zu erhalten, umfassend die Auflageflächen (21) und die Kontaktflächen (22) des Querelements (10),
wobei letzterer Arbeitsgang verrichtet wird, nachdem die anderen Arbeitsgänge verrichtet worden sind.

2. Verfahren nach Anspruch 1, wobei das Formen einer Hauptteilfläche (11, 12) des Querelements (10) durch Aufbringen von Druck in zwei Phasen erfolgt, wobei in einer ersten Phase Druck ausgeübt wird, um Material des Basiselements (32) über den Hauptteilflächen (11, 12) zu verlagern, wobei eine vorbestimmte Aussparung in der Hauptteilfläche (11, 12) erzielt wird, und wobei in einer zweiten Phase Druck aufgebracht wird, um einen vertieften Teilbereich (16) in dem Basiselement (32) zu formen, als deren Ergebnis eine Erhebung an einer Hauptteilfläche (11, 12) des Querelements (10) und eine Aussparung an einer anderen Hauptteilfläche (11, 12) des Querelements (10) erhalten wird.

3. Verfahren nach Anspruch 2, wobei zum Zweck des Herstellens der zweiten Anzahl von Ausnehmungen Schneidglieder (48) zum Einsatz kommen und wobei Positionen der Schneidglieder (48) bezogen auf das Basiselement (32) an eine Position des vertieften Teilbereichs (16) angepasst werden, der in dem Basiselement (32) ausgebildet ist.

4. Verfahren nach Anspruch 3, wobei zum Zweck des Positionierens der Schneidglieder (48) bezogen auf das Basiselement (32) ein mit den Schneidgliedern (48) verbundenes Positionsteil zum Einsatz kommt, das in den vertieften Teilbereich (16) eingeführt wird, der in dem Basiselement (32) ausgebildet ist.

5. Verfahren nach einem der Ansprüche 1 bis 4, wobei das Formen einer Hauptteilfläche (11, 12) des Querelements (10) durch Aufbringen von Druck das Herstellen einer Stufe (27) in der Hauptteilfläche (11, 12) umfasst.

6. Verfahren nach einem der Ansprüche 1 bis 5, wobei das Herstellen der zweiten Anzahl von Ausnehmungen das Ausschneiden von Teilbereichen des Basiselements (32) beinhaltet, und wobei vor dem Prozess des Ausschneidens der Großteil dieser Teilbereiche von Material umgeben ist.

7. Verfahren nach einem der Ansprüche 1 bis 6, wobei das Basiselement (32), aus dem das Querelement (10) hergestellt wird, Teil eines Trägers (30) ist, der mehr als ein Basiselement (32) umfasst.

8. Verfahren nach Anspruch 7, wobei das Querelement (10) nach dem Herstellen der zweiten Anzahl von Ausnehmungen letztendlich durch Abtrennen des Basiselements (32) von dem Träger (30) erhalten wird.

9. Verfahren nach Anspruch 7 oder 8, wobei nach dem Herstellen der zweiten Anzahl von Ausnehmungen das Basiselement (32) mit dem Träger (30) an einem Ende eines oberen Teilbereichs (15) verbunden wird, in dem mindestens ein Teil des vertieften Teilbereichs (16) angeordnet ist.

10. Verfahren nach einem der Ansprüche 7 bis 9, wobei der Träger wie ein Streifen ausgebildet ist, wobei Basiselemente (32), die nacheinander in einer Längsrichtung des Trägers (30) positioniert sind, aufeinander folgenden Arbeitsgängen unterzogen werden.

11. Verfahren nach Anspruch 10, wobei die aufeinander folgenden Arbeitsgänge an Basiselementen (32) verrichtet werden, die nacheinander in der Längsrichtung positioniert werden.

12. Verfahren nach Anspruch 10 oder 11, wobei in einer Querrichtung der Träger (30) Paare von Basiselementen (32) aufweist, wobei in einer Längsrichtung Materialstreifen (35) des Trägers (30), die sich zwischen den Basiselementen (32) der Paare von Basiselementen (32) erstrecken, unversehrt bleiben bis die Basiselemente (32) von dem Träger (30) abgetrennt werden.

13. Verfahren nach Anspruch 12, wobei der Träger (30) an Positionen, die zwischen den Paaren von Basiselementen (32) in einer Längsrichtung angeordnet sind, mit Zentrierbohrungen (34) versehen ist.

## Revendications

1. Procédé de fabrication d'un élément transversal (10) qui est destiné à faire partie d'une courroie de poussée (6) pour une transmission à variation continue (1), lequel élément transversal (10) comporte deux surfaces portantes (21) pour supporter des éléments porteurs (7) de la courroie de poussée (6) et deux surfaces de contact (22) pour établir un contact entre l'élément transversal (10) et des poulies (4, 5) de la transmission à variation continue (1), dans lequel un élément de base (32) est prévu, et dans lequel les opérations suivantes sont exécutées dans l'élément de base (32) :
- réaliser un premier nombre de découpes afin d'obtenir un premier nombre de parties d'un contour de l'élément transversal (10) ;
- exercer une pression en divers endroits sur une surface de corps principal (11, 12) de l'élément de base (32) afin de mettre en forme une surface de corps principal (11, 12) de l'élément transversal (10) ; et
- réaliser un deuxième nombre de découpes afin d'obtenir un deuxième nombre de parties du contour de l'élément transversal (10), comprenant les surfaces portantes (21) et les surfaces de contact (22) de l'élément transversal (10) ;
dans lequel la dernière opération est exécutée après que les autres opérations ont été exécutées.

2. Procédé selon la revendication 1, dans lequel la mise en forme d'une surface de corps principal (11, 12) de l'élément transversal (10) en exerçant une pression se fait en deux phases, où dans une première phase, on exerce une pression afin de déplacer le matériau de l'élément de base (32) d'un bord à l'autre de la surface de corps principal (11, 12), moyennant quoi un relief prédéterminé est obtenu dans la surface de corps principal (11, 12), et où dans une deuxième phase, on exerce une pression afin de former une partie en retrait (16) dans l'élément de base (32), en conséquence de quoi une protubérance est obtenue dans la surface de corps principal (11, 12) de l'élément transversal (10), et un trou est obtenu dans une autre surface de corps principal (11, 12) de l'élément transversal (10).

3. Procédé selon la revendication 2, dans lequel, dans le but de réaliser le deuxième nombre de découpes, des éléments coupants (48) sont appliqués, et dans lequel les positions des éléments coupants (48) par rapport à l'élément de base (32) sont adaptées à une position de la partie en retrait (16) qui est formée dans l'élément de base (32).

4. Procédé selon la revendication 3, dans lequel, dans le but de positionner les éléments coupants (48) par rapport à l'élément de base (32), un élément de positionnement connecté aux éléments coupants (48) est appliqué, qui est inséré dans la partie en retrait (16) qui est formée dans l'élément de base (32).

5. Procédé selon l'une quelconque des revendications 1 à 4, dans lequel la mise en forme d'une surface de corps principal (11, 12) de l'élément transversal (10) en exerçant une pression comprend le fait de former un épaulement (27) dans la surface de corps principal (11, 12).

6. Procédé selon l'une quelconque des revendications 1 à 5, dans lequel la réalisation du deuxième nombre de découpes implique la découpe de parties lâches de l'élément de base (32), et dans lequel, avant le processus de découpe de parties lâches, on entoure la partie principale de ces parties d'un matériau.

7. Procédé selon l'une quelconque des revendications 1 à 6, dans lequel l'élément de base (32) à partir duquel l'élément transversal (10) est fabriqué fait partie d'un élément porteur (30) qui comprend plus d'un élément de base (32).

8. Procédé selon la revendication 7, dans lequel l'élément transversal (10) est finalement obtenu en détachant l'élément de base (32) de l'élément porteur (30) après la réalisation du deuxième nombre de découpes.

9. Procédé selon la revendication 7 ou 8, dans lequel, après la réalisation du deuxième nombre de découpes, l'élément de base (32) est connecté à l'élément porteur (30) à une extrémité d'une partie supérieure (15) dans laquelle au moins une partie de la partie en retrait (16) est située.

10. Procédé selon l'une quelconque des revendications 7 à 9, dans lequel l'élément porteur (30) a la forme d'une bande, dans lequel les éléments de base (32) qui sont successivement positionnés dans une direction longitudinale de l'élément porteur (30) sont soumis à des traitements successifs.

11. Procédé selon la revendication 10, dans lequel les traitements successifs sont effectués dans des éléments de base (32) qui sont successivement positionnés dans la direction longitudinale.

12. Procédé selon la revendication 10 ou 11, dans lequel, dans une direction transversale, l'élément porteur (30) comporte des paires d'éléments de base (32), dans lequel, dans une direction longitudinale, des bandes de matériau (35) de l'élément porteur (30) qui s'étendent entre les éléments de base (32) des paires d'éléments de base (32) sont laissées intactes jusqu'à ce que les éléments de base (32) soient détachés de l'élément porteur (30).

13. Procédé selon la revendication 12, dans lequel l'élément porteur (30) est pourvu de trous de centrage (34) en des positions qui sont situées entre les paires d'éléments de base (32) dans une direction longitudinale.
